Europäisches Patentamt

European Patent Office

Office européen des brevets

(11) Publication number: **0 436 993 A1**

# EUROPEAN PATENT APPLICATION

(21) Application number: 90203450.3

(51) Int. Cl.⁵: **B60L 5/19**

(22) Date of filing: 20.12.90

(30) Priority: 10.01.90 IT 1903690

(43) Date of publication of application:
17.07.91 Bulletin 91/29

(84) Designated Contracting States:
AT BE CH DE DK ES FR GB GR LI LU NL SE

(71) Applicant: SO.C.I.MI SOCIETA COSTRUZIONI
INDUSTRIALI MILANO S.P.A.
Via Varesina 115
I-20156 Milan(IT)

(72) Inventor: Marzocco, Alessandro
Via Monte Rosa 48
I-20149 Milan(IT)

(74) Representative: De Carli, Erberto et al
ING. BARZANO' & ZANARDO MILANO S.p.A.
Via Borgonuovo, 10
I-20121 Milano(IT)

(54) Pantograph for variable-inclination trains.

(57) A pantograph (ii) for variable-inclination trains
can be moved transversely on the roof (10) of the
train body (12) by hydraulic circuits (25,26) common
with the devices (19) for varying the body inclination,
the pantograph (11), of foldable structure and pro-
vided on a movable element (31), being able to
maintain the centre of the contact points between
the electric contact wire (36) and the contact bow
(35) always at the bow centre.

EP 0 436 993 A1

# PANTOGRAPH FOR VARIABLE-INCLINATION TRAINS

This invention relates to a pantograph for variable-inclination trains.

In variable-inclination trains, current is withdrawn using pantographs provided with complicated heavy support structures, the purpose of which is to maintain the vertical axis of the pantograph approximately coinciding with the vertical axis passing through the electric contact wire and the track centre, during the sideways inclination movement of the train body.

This type of pantograph is rather complicated and requires periodic inspection with consequent high maintenance costs. This is due in practice to the complication of the mechanical structures which have to transmit the curving movement from the bogie frame to the pantograph. These transmission structures are amongst other things very bulky.

The object of the present invention is to overcome said drawbacks by providing a pantograph of simplified structure controlled by pneumatic drives in accordance with the progressively inclined positions of the body of a variable-inclination railway vehicle. This object is attained by a pantograph for variable-inclination trains essentially consisting of a contact bow articulatedly mounted on a multiple-arm foldable support structure, said support structure being connected to a base fixed onto insulators above the body of said train, characterised in that said insulators are supported by an element which is transversely movable relative to said body via guide and movement-producing devices, said devices being controlled by a central control/command unit arranged to sense the inclination movements of said body, to then provide for relative movements of said transversely movable element.

Specifically according to the present invention, said transversely movable element is provided with pairs of guide rollers positioned at its ends, said rollers being arranged to engage with a guide rail.

Again according to the invention, said guide rail is a curved guide rail with its centre of curvature coinciding with the centre of rotation of said body.

Said transversely movable element is connected to an actuator fixed on the roof of said body.

In a preferred embodiment of the present invention said actuator is a hydraulic cylinder operated by a branch from the hydraulic circuit which controls the inclination of said body. The characteristics and further advantages of the present invention will be more apparent from the description given hereinafter by way of non-limiting example with reference to the accompanying drawings in which:

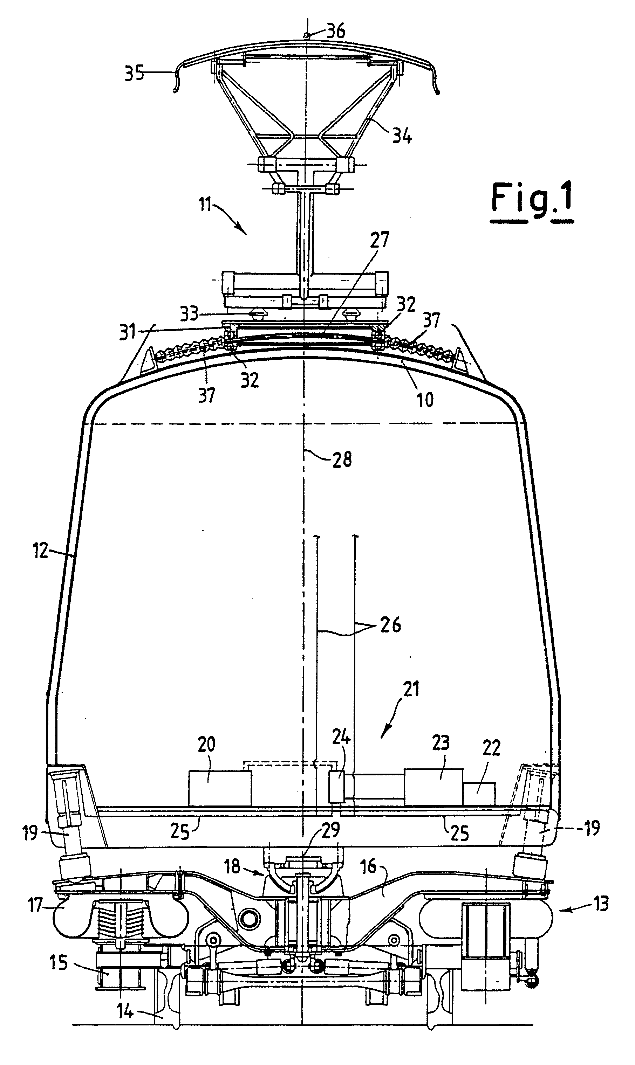

Figure 1 is a section through a pantograph according to the invention;

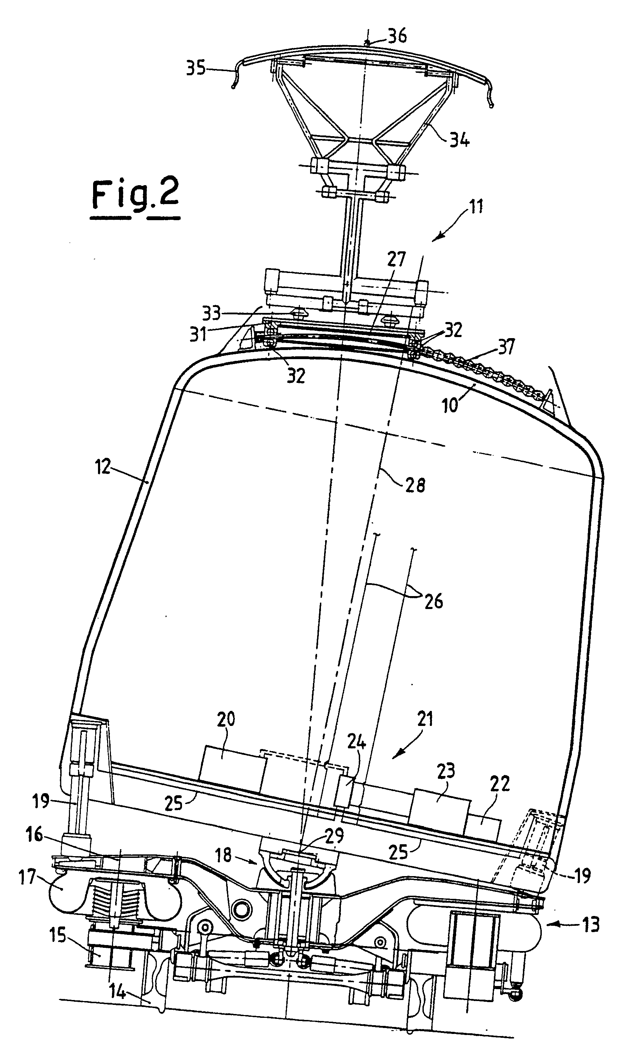

Figure 2 is a sectional view of the elements of Figure 1 arranged in different operating positions; and

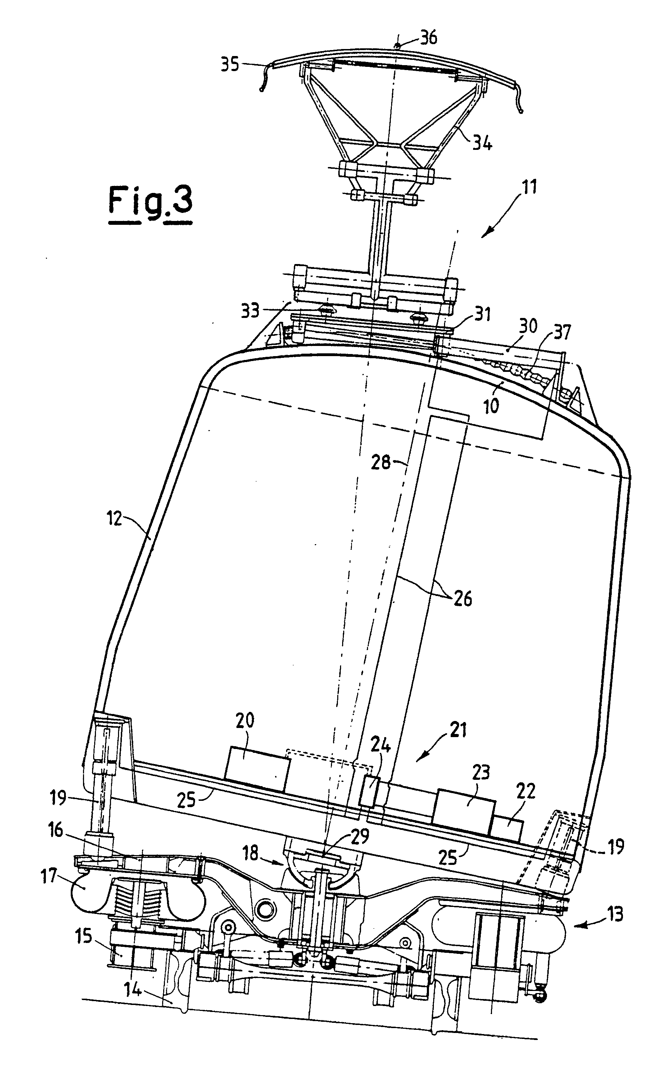

Figure 3 is a further sectional view with the elements arranged as in Figure 2.

In the figures the reference numeral 11 indicates overall a pantograph according to the invention mounted on a variable-inclination body 12.

The figures also show the details of a variable-inclination bogie 13 on which the body 12 rests.

The bogie 13 comprises axles 14 rotatably mounted on the bogie frame 15, there also being fixed on the bogie frame 15 a swinging transom 16, with pneumatic springs 17 interposed between the swinging transom 16 and the bogie frame 15.

Centrally on the swinging transom 16 there is provided a spherical thrust bearing 18, consisting of a hollow hemispherical portion mobile between two conjugate parts which are held together and fixed to the swinging transom and to the body 12 respectively. The hollow hemispherical portion has an aperture such as to enable it to also rotate relative to the conjugate parts about a horizontal axis.

The body 12 is rotated about the swinging transom 16 in accordance with the centrifugal force by hydraulic cylinders 19 positioned to the sides of the body 12 and controlled by a control unit 20 connected to a hydraulic unit indicated overall by 21. The hydraulic unit 21 consists of a motor 22 driving a pump 23, downstream of which a servovalve 24 is provided. From the servovalve 24 there extend two separate hydraulic circuits 25 and 26 directed respectively towards the hydraulic cylinders 19 and the pantograph 11.

On the roof 10 of the body 12 there is fixed a curved rail 27 the radius 28 of which has its centre coinciding with the centre of rotation of the body 12, both being indicated at 29. A support element 31 slides on the rail 27 by the action of a hydraulic cylinder 30, and is provided at its ends with two pairs of rollers 32 engaging the rail 27. The hydraulic cylinder 30 is operated, with consequent transverse movement of the element 31 relative to the body 12, by the hydraulic circuit 26, which is connected to the cylinder 30.

The curved rail 27 is protected by elastic bellows 37, which surround its profile.

On the support element 31 there are provided two insulators 33 on which a multiple-arm foldable structure indicated overall by 34 and carrying a contact bow 35 at is top is fixed. The electrical contact wire indicated schematically by 36 lies above the bow 35 and in contact with it.

The vertical axis of the pantograph according to the invention can be made to coincide with the vertical axis passing through the electrical contact wire and through the centre of rotation of the body for every angular position assumed by this latter. The centre of rotation of the body coincides with the centre of rotation of the spherical thrust bearing and with the centre plane through the track.

This always results in optimum contact between the bow and contact wire, so preventing these undergoing wear and thus saving costly maintenance. The hydraulic unit 21 is formed such that the transverse movement of the pantograph 11 always takes place coherently with the body 12, ie always in the opposite direction to the lateral movement of the roof 10.

As the quantity of fluid displaced within the circuit 25 for inclining the body 12 is proportional to its angle of incidence, the cylinder 30 proportionally moves the pantograph (in the opposite direction) by an amount such that the contact between the contact bow and the electrical contact wire always takes place at the centre of the bow.

## Claims

1. A pantograph assembly for variable-inclination trains essentially consisting of a contact bow articulatedly mounted on a multiple-arm foldable support structure, said support structure being connected to a base fixed onto insulators above the body of said train, characterised in that said insulators are supported by an element which is transversely movable relative to said body via guide and movement-producing devices, said devices being controlled by a central control/command unit arranged to sense the inclination movements of said body, to then provide for relative movements of said transversely movable element.

2. A pantograph assembly as claimed in claim 1, characterised in that said transversely movable element is provided with pairs of guide rollers positioned at its ends, said rollers being arranged to engage with a guide rail.

3. A pantograph assembly as claimed in claim 2, characterised in that said guide rail is a curved guide rail with its centre of curvature coinciding with the centre of rotation of said body.

4. A pantograph assembly as claimed in claim 1, characterised in that said transversely movable element is connected to an actuator fixed on the roof of said body.

5. A pantograph assembly as claimed in claim 4, characterised in that said actuator consists of a hydraulic cylinder operated by a branch from the hydraulic circuit which controls the inclination of said body.

6. A pantograph assembly as claimed in claim 5, characterised in that said hydraulic circuit impresses a movement on said cylinder, in the opposite direction to the direction of inclination of the body, which is proportional to the inclination assumed by said body.

7. A pantograph assembly as claimed in claim 1, characterized in that said movement-producing devices are controlled to maintain the centre of the contact points between the electrical supply wire and the contact bow always at the bow centre.

Fig.1

Fig.2

# Fig.3

European
Patent Office

**EUROPEAN SEARCH
REPORT**

Application Number

**EP 90 20 3450**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 243 405 (SIEMENS AKTIENGESELLSCHAFT) * page 5, paragraph 2 - page 6, paragraph 1 * * page 8, paragraph 2; claims 1, 2, 6, 7; figure 3 * — — — | 1-6 | B 60 L 5/19 |
| X | US-A-1 828 945 (ALLEN M. ROSSMAN) * page 7, line 38 - page 9, line 27; claims 1, 4, 8-15; figures 16, 21-31 * — — — — — | 1-4,7 | |

TECHNICAL FIELDS
SEARCHED (Int. Cl.5)

B 60 L

The present search report has been drawn up for all claims

| Place of search | Date of completion of search | Examiner |
|---|---|---|
| The Hague | 05 April 91 | RIEUTORT A.S. |